(19) Europäisches Patentamt
European Patent Office
Office européen des brevets

(11) EP 1 118 623 A1

(12) EUROPEAN PATENT APPLICATION
published in accordance with Art. 158(3) EPC

(43) Date of publication:
25.07.2001 Bulletin 2001/30

(21) Application number: 00917293.3

(22) Date of filing: 12.04.2000

(51) Int Cl.7: C08B 37/08

(86) International application number:
PCT/JP00/02380

(87) International publication number:
WO 00/63255 (26.10.2000 Gazette 2000/43)

(84) Designated Contracting States:
AT BE CH CY DE DK ES FI FR GB GR IE IT LI LU MC NL PT SE

(30) Priority: 16.04.1999 JP 10879699

(71) Applicant: Daicel Chemical Industries, Ltd.
Osaka 590-8501 (JP)

(72) Inventor: OKAMOTO, Yoshio
Nagoya-shi, Aichi 461-0042 (JP)

(74) Representative: Grünecker, Kinkeldey, Stockmair & Schwanhäusser Anwaltssozietät
Maximilianstrasse 58
80538 München (DE)

# (54) PROCESS FOR PRODUCING CHITIN DERIVATIVE

(57) The present invention provides a process for preparing a chitin derivative having a high chiral discrimination power and an optical isomer-separating agent comprising the chitin derivative as a chiral discrimination agent. That is, the present invention provides a process for preparing a chitin derivative, which comprises preparing a derivative of chitin in a solvent mixture of N,N-dimethylacetamide and lithium chloride, and an optical isomer-separating agent comprising a chitin derivative as a chiral discrimination agent prepared by the process.



Printed by Jouve, 75001 PARIS (FR)

## Description

Technical Field

The present invention relates to a process for preparing a chitin derivative and an agent for separating optical isomers which comprises a chitin derivative as a chiral discrimination agent prepared by the process.
The agent for separating optical isomers according to the present invention is used for optical resolution of a wide variety of chiral compounds including medicaments, foods, agricultural chemicals, perfumes etc.

Prior Art

Many organic compounds occur as optical isomers which are completely identical in physical or chemical properties, for example in physical properties such as boiling point, melting point and solubility, but are different in biological activity. This is because most of the proteins and sugars constituting living things are made of either optical isomer, and thus there occurs a difference in the way of action on the other optical isomer to bring about a difference in biological activity. In the field of pharmaceutical preparations in particular, there are often cases where there is a significant difference in efficacy and toxicity among optical isomers. Hence, the Ministry of Health and Welfare states, in the Guideline for Production of Pharmaceutical Preparations (1985), "When the chemical in question is a racemate, it is desired that each of the isomers be examined for absorption, distribution, metabolism, and excretion movement".
As described above optical isomers are completely identical in physical or chemical properties, for example in physical properties such as boiling point, melting point and solubility so that they cannot be analyzed when a usual separation means is used. Therefore, the techniques for analyzing a wide variety of optical isomers easily and accurately have been extensively studied. As an analytical means meeting these requirements, optical resolution by high performance liquid chromatography (HPLC), particularly optical resolution by a chiral column in HPLC, has been proposed. The chiral column referred to herein makes use of a chiral discrimination agent itself or a chiral stationary phase having a chiral discrimination agent supported on a suitable carrier. The chiral discrimination agent developed so far includes e.g. optically active triphenylmethyl polymethacrylate (JP-A 57-150432), cellulose or amylose derivatives (Y. Okamoto, M. Kawashima and K. Hatada, J. Am. Chem. Soc., vol. 106, No. 18, 5357-5359 (1984)), ovomucoid (JP-B 63-307829) etc. Among many of these chiral stationary phases in HPLC, optical resolution columns having cellulose or amylose derivatives supported on silica gel are known to have a high chiral discrimination power to a very wide variety of compounds.
In recent years, preparative separation by optically active liquid chromatography in the industrial scale, which comprises a combination of a chiral stationary phase in HPLC and a simulated moving beds process, is examined (Pharm Tech Japan, Vol. 12, No. 1 (1996), pp. 43-52), and there is demand for a chiral stationary phase having higher separation factor $\alpha$ for better separation of a desired compound in order to achieve not only complete separation but also the improvement of productivity in preparative separation.
Meanwhile, an investigation has been extensively undertaken to find polysaccharides having a higher chiral discrimination power with higher $\alpha$ values, other than polysaccharides such as cellulose and amylose.
Because chitin and chitosan, that is, abundant resources in crustaceans are inexpensive polysaccharides available in large amounts, they are attractive materials expected for use in development of the preparative, chiral discrimination agent described above. However, it was reported in an article by S. Matlin et al. (Chirality, 8, 131-135 (1996)) that carbamate derivative of chitin are poor in the chiral discrimination power, and thus their derivatives have been regarded as polysaccharides not having such a high chiral discrimination power as cellulose and amylose have. In this report, Matlin et al. have prepared a separating agent for optical isomer by subjecting 2 kinds of chitin as the starting material purchased from Sigma Ltd. and CETEDRE Ltd. to derivatization reaction in pyridine that is a solvent used ordinarily for preparing carbamate derivatives of cellulose or amylose, followed by supporting the resulting compound on silica gel. The detailed conditions in this derivatization are that chitin is heated under stirring for 24 hours in pyridine, then 3.5 equivalents of phenyl isocyanate or 3,5-dimethylphenyl isocyanate is added thereto, and the mixture is further reacted for 72 hours.
Accordingly, the object of the present invention is to provide a process for preparing a chitin derivative having a high chiral discrimination power and an optical isomer-separating agent comprising the chitin derivative as a chiral discrimination agent.

Disclosure of Invention

The present inventors arrived at the present invention as a result of their eager study for solving the problem described above.
That is, the present invention provides a process for preparing a chitin derivative, which comprises preparing

a derivative of chitin in a solvent mixture of N,N-dimethylacetamide and lithium chloride, and an optical isomer-separating agent comprising a chitin derivative as a chiral discrimination agent prepared by the process.

The chitin derivative of the present invention contains ester linkage, urethane linkage, ether linkage or the like in a part of hydroxyl groups. Preferably, the chitin derivative contains 0.1 or more ester linkage or urethane linkage per glucose unit.

The chitin derivative can be prepared by reacting chitin with a compound having functional groups being reactive with a hydroxyl group(s) of the chitin. The compound having functional groups being reactive with a hydroxyl group(s) of the chitin is e.g. an isocyanic acid derivative, a carboxylic acid, an ester compound, an acid halide, an acid amide compound, a halogen compound, an aldehyde, an alcohol, a compound having other eliminating groups, or an aliphatic, alicyclic, aromatic or heteroaromatic compound thereof.

Preferably, the reaction is carried out in a solution of 0.1 to 20 g lithium chloride dissolved in 100 ml N,N-dimethylacetamide.

Further, the present invention provides a method of separating optical isomers wherein the chitin derivative prepared by the process described above is used as a chiral discrimination agent, and use of the chitin derivative prepared by the process described above as a chiral discrimination agent for separation of optical isomers.

Detailed Description of the Invention

Hereinafter, the mode for carrying out the present invention is described in more detail.

The number-average degree of polymerization of the chitin used in the present invention preferably ranges from 5 or more, more preferably 10 or more to 1000 or less for easy handling although there is no particular upper limit. The number of acetyl groups reacting with an amino group at the 6-position per glucose unit is preferably in the range of 0.1 to 1.0, more preferably 0.8 to 1.0.

In the present invention, the chitin derivative is a compound obtained by allowing a compound having functional groups being reactive with a hydroxyl group(s) of the chitin described above to be bound via ester linkages, urethane linkages, ether linkages and the like to a part of hydroxyl groups of the chitin, and this compound is preferably a carbamate derivative or an ester derivative. A particularly preferable chitin derivative used in the present invention is an ester derivative or a carbamate derivative of chitin having 0.1 or more ester linkage or urethane linkage per glucose unit.

In the process of the present invention, a chitin derivative is prepared by reacting chitin with a compound having functional groups being reactive with a hydroxyl group(s) of the chitin in a solvent mixture of N,N-dimethylacetamide and lithium chloride. The compound having functional groups being reactive with a hydroxyl group(s) of the chitin may be any compound selected from an isocyanic acid derivative, a carboxylic acid, an ester, an acid halide, an acid amide compound, a halogen compound, an aldehyde, an alcohol, a compound having other eliminating groups, and aliphatic, alicyclic, aromatic or heteroaromatic compounds thereof.

In the present invention, a solvent mixture of N,N-dimethylacetamide and lithium chloride for the derivatization is preferably a solution prepared by dissolving 0.1 to 20 g lithium chloride in 100 ml N,N-dimethylacetamide, particularly preferably a solution prepared by dissolving 5 to 8 g lithium chloride in 100 ml N,N-dimethylacetamide.

After the solvent mixture of N,N-dimethylacetamide and lithium chloride as described above is added to chitin, the mixture is preferably subjected to pretreatment by heating and stirring at 50 to 150 °C, preferably at 80 to 100 °C for 1 hour or more, more preferably for 10 hours or more prior to the reaction with the derivatization reagent, in order to prepare the chitin derivative of the present invention in the solvent mixture of N,N-dimethylacetamide and lithium chloride.

The optical isomer-separating agent of the present invention makes use of the chitin derivative obtained as mentioned above as a chiral discrimination agent, and the desired optical isomer-separating agent can be prepared either by a method of supporting the chitin derivative on a carrier as described below or by a method of grinding or granulating the chitin derivative itself. The term "supporting" means that the chitin derivative is immobilized on the carrier, and the "supporting" method may be any means through physical adsorption between the chitin derivative and the carrier, chemical bonding thereof to the carrier, chemical bonding among the chitin derivatives, chemical bonding thereof to a third component, irradiation of the chitin derivative, radical reaction thereof, and the like.

The carrier used in the present invention includes porous organic carriers or porous inorganic carriers among which porous inorganic carriers are preferably used. Preferable examples of the porous organic carriers include polymeric materials made of polystyrene, polyacrylamide, polyacrylate etc., and preferable examples of the porous inorganic carriers include silica, alumina, magnesia, glass, kaolin, titanium oxide, silicate, hydroxyapatite etc. A particularly preferable carrier is silica gel, and the particle diameter of silica gel is 0.1 μm to 10 nm, preferably 1 μm to 300 μm, and the average pore diameter is 10 Å to 100 μm, preferably 50 Å to 50000 Å. The carrier is preferably surface-treated to eliminate the influence of remaining silanol, but there is no problem even if the carrier is not surface-treated. The amount of the chitin derivative supported on the carrier is 1 to 100 parts by weight, particularly preferably 5 to 60 parts

by weight, relative to 100 parts by weight of the carrier.

The method of grinding or granulating the chitin derivative may be any conventional method known in the art. The resulting ground or granulated chitin derivative is used as such or desirably classified to have a uniform particle size.

Generally, the method of separating optical isomers by means of the optical isomer-separating agent of the present invention involves chromatography such as gas chromatography, liquid chromatography and thin layer chromatography among which liquid chromatography is preferably used.

In the process for preparing chitin derivatives from a chitin in the solvent mixture of N,N-dimethylacetamide and lithium chloride according to the present invention, there can be obtained the chitin derivative having a high chiral discrimination power, which is useful as a chiral discrimination agent for an optical isomer-separating agent.

## Examples

The present invention is described in more detail with reference to Examples, but the present invention is not limited to these Examples. The capacity factor (k') and separation factor ($\alpha$) in the following Examples are defined respectively in the following equations:

Capacity factor: k'=[(retention time of separated compound)-(dead time)]/(dead time)

Separation factor: $\alpha$= (capacity factor of more strongly absorbed

compound)/(capacity factor of more weakly absorbed compound)

The elution time of tri-tert-butylbenzene was regarded as the dead time in these equations.

### Synthetic Example 1

Synthesis of chitin bis (3,5-dimethylphenylcarbamate) (1) from crab-derived chitin as the starting material

8.0 g of vacuum dried lithium chloride was dissolved in 100 ml N,N-dimethylacetamide (DMAc) to prepare a DMAc/LiCl solution.

In a nitrogen atmosphere, 24 ml of the above DMAc/LiCl solution was added to 0.6 g chitin (derived from crab shells, SIGMA), and the mixture was stirred for 21 hours in an oil bath at 80 °C. 3,5-Dimethylphenyl isocyanate (1.73 g, 11.8 mmol, 2.0 equivalents) and pyridine (0.93 g, 11.8 mmol) were added thereto, and the mixture was further reacted for 5 hours in the oil bath at 80 C. The reaction solution was cooled to room temperature, then added dropwise to 240 ml of methanol to precipitate chitin bis(3,5-dimethylphenylcarbamate) (1). This product was collected by filtration through glass filter, then washed well with methanol, and vacuum dried at 60 °C for 5 hours, whereby chitin bis (3,5-dimethylphenylcarbamate) (1) (0.78 g, 53.1 %) was obtained.

The results of the elementary analysis of the resulting chitin derivative are shown in Table 1.

### Synthetic Example 2

Synthesis of chitin bis(3,5-dimethylphenylcarbamate) (2) from lobster-derived chitin as the starting material

In a nitrogen atmosphere, 40 ml of the DMAc/LiCl solution prepared in Synthetic Example 1 above was added to 1.0 g chitin (derived from lobster shells, SIGMA), and the mixture was stirred for 21 hours in an oil bath at 80 °C. 2.90 g (19.7 mmol, 2.0 equivalents) of 3,5-dimethylphenyl isocyanate and 1.56 g (19.7 mmol) of pyridine were added thereto, and the mixture was further reacted for 8 hours in the oil bath at 80 °C. The reaction solution was cooled to room temperature, then added dropwise to 400 ml of methanol to precipitate chitin bis(3,5-dimethylphenylcarbamate) (2). This product was collected by filtration through a glass filter, then washed well with methanol, and vacuum dried at 60 °C for 5 hours, whereby chitin bis(3,5-dimethylphenylcarbamate) (2) (2.15 g, 87.8 %) was obtained.

The results of the elementary analysis of the resulting chitin derivative are shown in Table 1.

Table 1

| Results of the elementary analysis of chitin bis(3,5-dimethylphenylcarbamate) | | | | | |
|---|---|---|---|---|---|
| | | C (%) | H (%) | N (%) | |
| Calculated value | | 62.76 | 6.28 | 8.45 | |
| Analytical value | Synthetic Example 1 | 60.41 | 6.44 | 8.00 | (1) derived from crab |
| | Synthetic Example 2 | 62.68 | 6.48 | 8.51 | (2) derived from lobster |

Synthetic Example 3

Synthesis of chitin diphenylcarbamate (3) from lobster-derived chitin as the starting material

In a nitrogen atmosphere, 40 ml of the DMAc/LiCl solution prepared in Synthetic Example 1 was added to 1.0 g chitin (derived from lobster shells, SIGMA), and the mixture was stirred for 21 hours in an oil bath at 80 °C. Phenylisocyanate (2.34 g, 19.7 mmol, 2.0 equivalents) and pyridine (1.56 g, 19.7 mmol) were added thereto, and the mixture was further reacted for 8 hours in the oil bath at 80 °C. The reaction solution was cooled to room temperature, then added dropwise to 400 ml of methanol to precipitate chitin diphenylcarbamate (3). This product was collected by filtration through a glass filter, then washed well with methanol, and vacuum dried at 60 °C for 5 hours, whereby chitin diphenylcarbamate (3) (1.47 g, 63.1 %) was obtained.

The results of the elementary analysis of the resulting chitin derivative are shown in Table 2.

Table 2

| Results of the elementary analysis of chitin diphenyl carbamate (3) | | | |
|---|---|---|---|
| | C (%) | H (%) | N (%) |
| Calculated value | 59.86 | 5.25 | 9.52 |
| Analytical value | 59.87 | 5.49 | 9.53 |

Synthetic Example 4

Synthesis of chitin bis (3,5-dichlorophenylcarbamate) (4) from lobster-derived chitin as the starting material

In a nitrogen atmosphere, 40 ml of the DMAc/LiCl solution prepared in the above Synthetic Example 1 was added to 1.0 g chitin (derived from lobster shells, SIGMA), and the mixture was stirred for 21 hours in an oil bath at 80°C. 3.70 g (19.7 mmol, 2.0 equivalents) of 3,5-dichlorophenyl isocyanate and 1.56 g (19.7 mmol) of pyridine were added thereto, and the mixture was further reacted for 8 hours in the oil bath at 80°C. The reaction solution was cooled to room temperature, then added dropwise to 400 ml of methanol to precipitate chitin bis(3,5-dichlorophenylcarbamate) (4). This product was collected by filtration with a glass filter, then washed well with methanol, and vacuum dried at 60°C for 5 hours, whereby chitin bis(3,5-dichlorophenylcarbamate) (4) (2.37 g, 89.4 %) was obtained.

Synthetic Example 5

Synthesis of chitin bis(4-methylbenzoate) (5) from lobster-derived chitin as the starting material

In a nitrogen atmosphere, 40 ml of the DMAc/LiCl solution prepared in Synthetic Example 1 was added to 1.0 g chitin (derived from lobster shells, SIGMA), and the mixture was stirred for 21 hours in an oil bath at 80 °C. 4-Methyl benzoyl chloride (2.98 g, 19.7 mmol, 2.0 equivalents) and pyridine (1.56 g, 19.7 mmol) were added thereto, and the mixture was further reacted for 8 hours in the oil bath at 80 °C. The reaction solution was cooled to room temperature, then added dropwise to 400 ml of methanol to precipitate chitin bis(4-methylbenzoate) (5). This product was collected by filtration through a glass filter, then washed well with methanol, and vacuum dried at 60 °C for 5 hours, whereby chitin bis(4-methylbenzoate) (5) (1.80 g, 83.3 %) was obtained. Example 1: Preparation of a chiral stationary phase having chitin bis(3,5-dimethylphenylcarbamate) (1) as a chiral discrimination agent

1.0 g of the chitin derivative obtained in Synthetic Example 1 was dissolved in 10 ml mixed solvent (5/1) of dimethyl sulfoxide (DMSO) and tetrahydrofuran (THF), and then supported on 4 g of silica gel treated with aminopropyl silane (with a particle diameter of 7 µm and a pore diameter of 1000 Å, produced by Daiso) . The solvent was removed,

whereby a chiral stationary phase (referred to hereinafter as CSP-1) supporting chitin bis(3,5-dimethylphenylcarbamate) (1) was prepared.

Example 2: Preparation of a chiral stationary phase comprising chitin bis(3,5-dimethylphenylcarbamate) (2) as a chiral discrimination agent

1.0 g of the chitin derivative obtained in Synthetic Example 2 was dissolved in 10 ml mixed solvent (5/1) of DMSO and THF and then supported on 4 g of silica gel treated with aminopropyl silane (with a particle diameter of 7 μm and a pore diameter of 1000 Å, produced by Daiso), and the solvent was removed, whereby a chiral stationary phase (referred to hereinafter as CSP-2) supporting chitin bis(3,5-dimethylphenylcarbamate) (2) was prepared.

Example 3: Preparation of a chiral stationary phase comprising chitin diphenylcarbamate (3) as a chiral discrimination agent

1.0 g of the chitin derivative obtained in Synthetic Example 3 was dissolved in 10 ml THF and then supported on 4 g of silica gel treated with aminopropyl silane (with a particle diameter of 7 μm and a pore diameter of 1000 Å, produced by Daiso), and the solvent was removed, whereby a chiral stationary phase (referred to hereinafter as CSP-3) supporting chitin diphenylcarbamate (3) was prepared.

Example 4: Preparation of a chiral stationary phase comprising chitin bis(3,5-dichlorophenylcarbamate) (4) as a chiral discrimination agent

1.0 g of the chitin derivative obtained in Synthetic Example 4 was dissolved in 10 ml THF and then supported on 4 g of silica gel treated with aminopropyl silane (with a particle diameter of 7 μm and a pore diameter of 1000 Å, produced by Daiso), and the solvent was removed, whereby a chiral stationary phase (referred to hereinafter as CSP-4) supporting chitin bis(3,5-dichlorophenylcarbamate) (4) was prepared.

Example 5: Preparation of a chiral stationary phase comprising chitin bis(4-methylbenzoate) (5) as a chiral discrimination agent

1.0 g of the chitin derivative obtained in Synthetic Example 5 was dissolved in 10 ml mixed solvent (7/3) of trifluoroacetic acid and THF, and then supported on 4 g of silica gel treated with aminopropyl silane (with a particle diameter of 7 μm and a pore diameter of 1000 Å, produced by Daiso). The solvent was removed, whereby a chiral stationary phase (referred to hereinafter as CSP-5) supporting chitin bis(4-methylbenzoate) (5) was prepared.

Application Example 1

Each of the chiral stationary phases prepared in Examples 1 to 5, 3.2 g, was packed into a ϕ0.46cm × L25cm stainless steel column under pressure by a slurry packing method, to prepare a column for separating optical isomers. This column was evaluated for its chiral discrimination power to Racemates 1 to 10 shown in the formulae below in liquid chromatography (mobile phase, n-hexane/2-propanol=90/10 (v/v) ; flow rate, 0.5 ml/min.).

Further, a chiral stationary phase (Comparative Product 1) supporting chitin bis(3,5-dimethylphenyl carbamate) (using chitin produced by SIGMA) described in Chirality, 8, 131-135 (1996) and a chiral stationary phase (Comparative Product 2) supporting chitin bis(3,5-dimethylphenyl carbamate) (using chitin produced by CETEDRA) were also evaluated for their chiral discrimination power in the same manner.

The results are shown in Table 3.

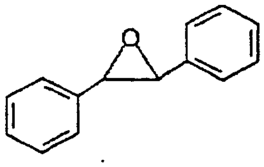

1

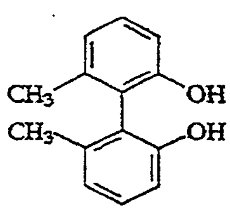

2

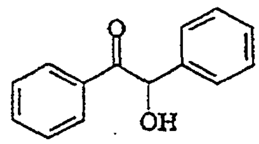

3

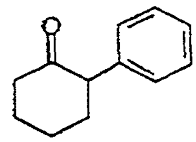

4

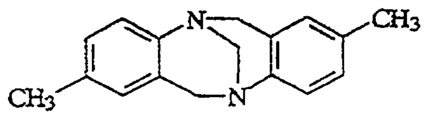

5

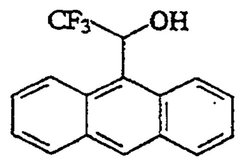

6

$Co(acac)_3$

7

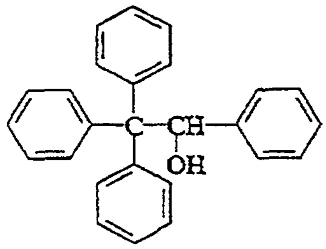

8

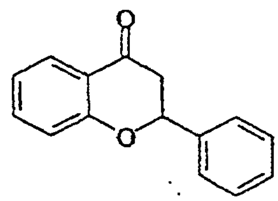

9

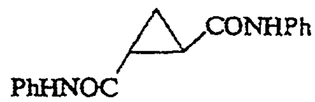

10

wherein, Ph represents phenyl group and acac represents acetylacetonato group.

Table 3

| Separating agent / Racemates | Separation factor (α) | | | | | | |
|---|---|---|---|---|---|---|---|
| | CSP-1 | CSP-2 | CSP-3 | CSP-4 | CSP-5 | Comparative Product 1 | Comparative Product 2 |
| Racemate 1 | Ca. 1.0 | Ca. 1.0 | Ca. 1.0 | Ca. 1.0 | Ca. 1.0 | 1.0 | 1.0 |
| Racemate 2 | 1.29 | 1.29 | 1.29 | 1.29 | 1.29 | - | - |
| Racemate 3 | 1.12 | 1.12 | 1.12 | 1.12 | 1.12 | 1.0 | 1.0 |
| Racemate 4 | Ca. 1.0 | Ca. 1.0 | Ca. 1.0 | Ca. 1.0 | Ca. 1.0 | - | - |
| Racemate 5 | 1.13 | 1.13 | 1.13 | 1.13 | 1.13 | 1.0 | 1.0 |
| Racemate 6 | 1.19 | 1.19 | 1.19 | 1.19 | 1.19 | 1.0 | 1.0 |
| Racemate 7 | Ca. 1.0 | Ca. 1.0 | Ca. 1.0 | Ca. 1.0 | Ca. 1.0 | - | - |
| Racemate 8 | 1.18 | 1.18 | 1.18 | 1.18 | 1.18 | - | - |
| Racemate 9 | 1.54 | 1.54 | 1.54 | 1.54 | 1.54 | 1.0 | 1.4 |
| Racemate 10 | 1.11 | 1.11 | 1.11 | 1.11 | 1.11 | - | - |

Application Example 2

The respective chiral stationary phases prepared in Examples 1 to 4 were used to prepare optical isomer-separating columns in the same manner as in Application Example 1. These columns were used to evaluate their chiral discrimination power to basic and acidic pharmaceutical samples (Racemates 11 to 20) represented by the following formulae in liquid chromatography. The results are shown in Table 4.

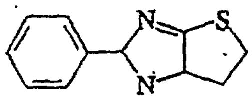

11

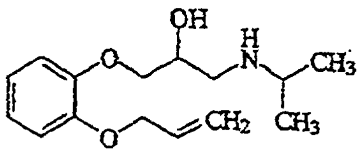

12

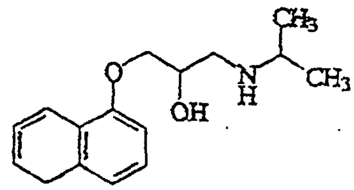

13

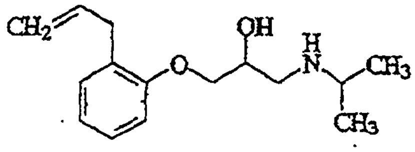

14

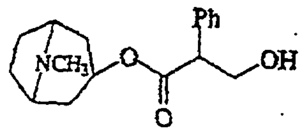

15

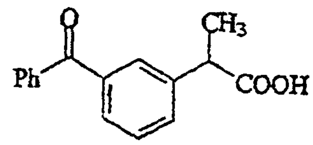

16

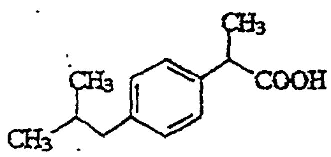

17

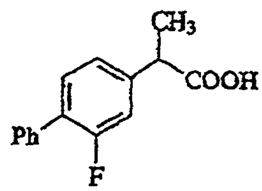

18

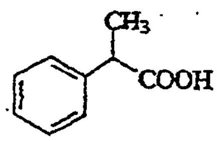

19

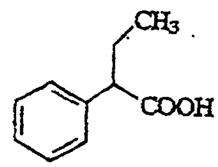

20

wherein, Ph represents phenyl group.
Conditions of liquid chromatography
Mobile phase;

A: n-hexane/2-propanol/diethylamine=95/5/0.1 (v/v/v)
B: n-hexane/2-propanol/diethylamine=97/3/0.1 (v/v/v)
C: n-hexane/2-propanol/trifluoroacetic acid=95/5/1 (v/v/v)
D: n-hexane/2-propanol/diethylamine=80/20/0.5 (v/v/v)
E: n-hexane/2-propanol/trifluoroacetic acid=90/10/1 (v/v/v) Flow rate;
a: 0.5 ml/min
b: 1.0 ml/min

Table 4

| Racemates \ Separating agent | Separation factor (α) | | | |
|---|---|---|---|---|
| | CSP-1 | CSP-2 | CSP-3 | CSP-4 |
| Racemate 11 | 1.23<br>Mobile Phase: A<br>Flow rate: a | 1.29<br>Mobile Phase: D<br>Flow rate: a | 1.29<br>Mobile Phase: A<br>Flow rate: b | 1.38<br>Mobile Phase: B<br>Flow rate: b |
| Racemate 12 | 1.07<br>Mobile Phase: A<br>Flow rate: a | 1.09<br>Mobile Phase: A<br>Flow rate: a | 1.08<br>Mobile Phase: A<br>Flow rate: a | 1.0<br>Mobile Phase: B<br>Flow rate: a |
| Racemate 13 | 1.05<br>Mobile Phase: B<br>Flow rate: a | 1.06<br>Mobile Phase: A<br>Flow rate: a | Ca. 1.0<br>Mobile Phase: A<br>Flow rate: a | 1.11<br>Mobile Phase: B<br>Flow rate: a |
| Racemate 14 | 1.14<br>Mobile Phase: B<br>Flow rate: a | 1.12<br>Mobile Phase: A<br>Flow rate: a | 1.10<br>Mobile Phase: A<br>Flow rate: a | 1.13<br>Mobile Phase: B<br>Flow rate: a |
| Racemate 15 | Ca. 1.0<br>Mobile Phase: A<br>Flow rate: a | Ca. 1.0<br>Mobile Phase: D<br>Flow rate: a | Ca. 1.0<br>Mobile Phase: A<br>Flow rate: b | 1.25<br>Mobile Phase: B<br>Flow rate: a |
| Racemate 16 | 1.23<br>Mobile Phase: C<br>Flow rate: a | 1.21<br>Mobile Phase: C<br>Flow rate: a | 1.23<br>Mobile Phase: C<br>Flow rate: b | 1.72<br>Mobile Phase: C<br>Flow rate: b |
| Racemate 17 | Ca. 1.0<br>Mobile Phase: C<br>Flow rate: a | Ca. 1.0<br>Mobile Phase: C<br>Flow rate: a | Ca. 1.0<br>Mobile Phase: C<br>Flow rate: a | 1.11<br>Mobile Phase: C<br>Flow rate: a |
| Racemate 18 | 1.08<br>Mobile Phase: C<br>Flow rate: a | 1.08<br>Mobile Phase: C<br>Flow rate: a | 1.06<br>Mobile Phase: C<br>Flow rate: a | 1.10<br>Mobile Phase: E<br>Flow rate: a |
| Racemate 19 | 1.29<br>Mobile Phase: C<br>Flow rate: a | 1.41<br>Mobile Phase: C<br>Flow rate: a | 1.17<br>Mobile Phase: C<br>Flow rate: a | 1.39<br>Mobile Phase: C<br>Flow rate: a |
| Racemate 20 | 1.38<br>Mobile Phase: C<br>Flow rate: a | 1.48<br>Mobile Phase: C<br>Flow rate: a | 1.22<br>Mobile Phase: E<br>Flow rate: a | 1.48<br>Mobile Phase: C<br>Flow rate: a |

## Claims

**1.** A process for preparing a chitin derivative, which comprises the step of preparing a derivative of chitin in a solvent

mixture of N,N-dimethylacetamide and lithium chloride.

**2.** The process as claimed in Claim 1, wherein the chitin derivative is a carbamate derivative or an ester derivative.

**3.** An agent for separating optical isomers, which comprises a chitin derivative preparing by the process as claimed in Claim 1 as a chiral discrimination agent.

**4.** The process as claimed in Claim 1, wherein the chitin derivative contains ester linkage, urethane linkage or ether linkage in a part of hydroxyl groups.

**5.** The process as claimed in Claim 1, wherein the chitin derivative contains 0.1 or more ester linkage or urethane linkage per glucose unit.

**6.** The process as claimed in Claim 1, which comprises reacting chitin with a compound having functional groups being reactive with a hydroxyl group(s) of chitin.

**7.** The process as claimed in Claim 6, wherein the compound having functional groups being reactive with a hydroxyl group(s) of chitin is an isocyanic acid derivative, a carboxylic acid, an ester compound, an acid halide, an acid amide compound, a halogen compound, an aldehyde, an alcohol, a compound having other eliminating groups, or aliphatic, alicyclic, aromatic or heteroaromatic compounds thereof.

**8.** The process as claimed in Claim 1, wherein the reaction is carried out in a solution of 0.1 to 20 g lithium chloride dissolved in 100 ml of N,N-dimethylacetamide.

**9.** A method of separating optical isomers, wherein the chitin derivative prepared by the process as claimed in Claim 1 is used as a chiral discrimination agent.

**10.** Use of the chitin derivative prepared by the process as claimed in Claim 1 as a chiral discrimination agent for separation of optical isomers.

## INTERNATIONAL SEARCH REPORT

International application No.
PCT/JP00/02380

**A. CLASSIFICATION OF SUBJECT MATTER**
Int.Cl$^7$ C08B37/08

According to International Patent Classification (IPC) or to both national classification and IPC

**B. FIELDS SEARCHED**

Minimum documentation searched (classification system followed by classification symbols)
Int.Cl$^7$ C08B37/08

Documentation searched other than minimum documentation to the extent that such documents are included in the fields searched

Electronic data base consulted during the international search (name of data base and, where practicable, search terms used)
CA(STN)

**C. DOCUMENTS CONSIDERED TO BE RELEVANT**

| Category* | Citation of document, with indication, where appropriate, of the relevant passages | Relevant to claim No. |
|---|---|---|
| A | US, 5202433, A (Daicel Chemical Industries, Ltd.,), 13 April, 1993 (13.04.93) & EP, 436722, A & WO, 9102006, A & JP, 3-58943, A | 1-10 |
| A | US, 4861872, A (Daicel Chemical Industries, Ltd.,), 29 August, 1989 (29.08.89) & EP, 281951, A & JP, 1-203402, A | 1-10 |
| A | JP, 2-184636, A (Daicel Chemical Industries, Ltd.), 19 July, 1990 (19.07.90) (Family: none) | 1-10 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 May, 2000 (01.05.00) | 16 May, 2000 (16.05.00) |
| Name and mailing address of the ISA/ Japanese Patent Office | Authorized officer |
| Facsimile No. | Telephone No. |

Form PCT/ISA/210 (second sheet) (July 1992)